# EUROPEAN PATENT APPLICATION

(11) **EP 1 594 031 A2**
(43) Date of publication of application: **09.11.2005**
(21) Application number: 05102493.3
(22) Date of filing: 30.03.2005
(51) Int. Cl.: G06F 1/00

(54) **Method and arrangement for protection of information**

(30) Priority: 30.03.2004 FI 20040472
(71) Applicant: TAMTRON OY, 33561 Tampere (FI)
(72) Inventor: Asikainen, Pentti, 35800, Mänttä (FI)
(74) Representative: Kupiainen, Juhani Kalervo

(57) **Abstract**

The invention relates to a method and an arrangement for protecting information in special applications. The invention can be preferably applied e.g. in a weighing system for denying unauthorized exploitation and alteration of certifiable and confidential information related to weighing. In the inventive solution, a data processing unit is provided with an accessory unit, including an additional processor and a protected storage space for storing information to be protected. The accessory unit has its processor monitoring alterations in information stored in the protected storage space. Information stored in the protected storage space can also be used for securing special application software. In the event of an alteration detected in information to be protected, the accessory unit issues a report about the alteration.

## Description

The invention relates to a method and an arrangement for protecting information in special applications. The invention can be preferably applied e.g. in a weighing system for denying unauthorized exploitation and alteration of certifiable and confidential information related to weighing.

Personal computers (PC) are used more and more also for special applications, such as for the implementation of measuring equipment or on-board computers for vehicles. This enables taking advantage of attractive manufacturing costs of PC devices a, high processing capacity provided thereby, as well as a wide range of turnkey programs available therefor. As one example of such a special application, reference is now made to scales systems.

The prior art scales systems consist traditionally of weighing sensors and as well as special scales instruments designed for weighing application. Such scales instruments contain necessary A/D (Analog/Digital) converters for converting sensor signals, a processor, operating switches, a display unit, as well as a serial communication port for other peripheral devices. In some prior art solutions, the peripheral device can also be a PC (Personal Computer).

In many cases, however, it is expensive and impractical to employ a separate scales instrument for providing and analyzing measuring results. The implementation of a scales instrument as an integral part of a PC, such as an on-board computer, would reduce manufacturing costs and provide a high data processing capacity. Still, problems are caused here by the openness of a conventional PC system. The scales instrument involves plenty of information, such as tuning data, user information, and log information, the access to which must not be possible for anyone except for authorized persons. Although available for PC software programs, various encryption and security functions are still not sufficiently reliable to guarantee that the information remain protected and unaltered. This applies not only to information to be stored, but also the weighing program itself; altering the program or replacing it with another program could facilitate intentional falsification of weighing results.

The same Applicant's patent application publication EP 1083417 A2 discloses a solution, which comprises calculating and storing a proof total from information to be protected. Information to be protected is compared, e.g. during weighing procedures, with the stored proof total for detecting a possible alteration in any piece of information. If the weighing apparatus is implemented by means of a PC, there is nevertheless the problem that alteration of a proof total, stored e.g. on the hard drive of a PC, is possible. In this case, the alteration of information is not detected, provided that a corresponding alteration has been managed in the stored proof total.

It is an object of the present invention to alleviate the foregoing drawbacks associated with the prior art. The present inventive method and arrangement make it possible to record and process weighing results with a data processing unit reliably without needing a separate scales instrument. In addition, the inventive method and arrangement provide a high-level security regarding the originality and protection of calibration and other such data. In the event of unauthorized alteration of information, the device can be blocked from operation.

The invention achieves its objectives with a solution, in which a data processing unit is provided with an accessory unit, including an additional processor and a protected storage space for storing information to be protected. The accessory unit has its processor monitoring alterations in information stored in the protected storage space and reporting alterations occurred.

The protected storage space is preferably stored with information relevant to a special application, such as parameters, tuning data, and software information, the protection of which is essential for securing a correct operation of the special application. The protected storage space can also be stored with a software-pertinent specific code which is verifiable from the software. Thereby, it is possible to make sure that the software used in a special application is original and unaltered.

In addition, the storing of information or the alteration of information stored in the protected storage space requires preferably a user identification, e.g. by means of a password or a smart card, or optionally the removal of a seal e.g. from a data transfer port or an activating switch in order to block unauthorized alteration of information.

The invention is highly suitable for use in such special applications in which a payable charge is determined on the basis of a measurement, the determination of a charge being subject to legal regulations and, therefore, the function must be secured. Hence, the inventive solution is capable of providing cost savings, versatility, and a reliable, certified operation of the special application.

A method of the invention for protecting information in a data processing system, the data processing system having the memory means of its data processing unit stored with an operating system and the data processing system being stored with special application software which is used in the data processing system, is characterized in that information relevant to a special application is stored in a protected storage space present in the supplement memory means of an accessory unit, the storing of information in the protected storage space and/or the alteration of stored information being monitored by an additional processor and alterations in information stored in the protected storage space being detected by means of the additional processor.

An arrangement of the invention for protecting information in a data processing system, the data processing system comprising a data processing unit which includes a processor unit, first memory means with an operating system stored therein, and the data processing system comprising an accessory unit and means for storing and operating a special application program, is characterized in that the accessory unit comprises an additional processor, as well as supplement memory means connected to the additional processor and having information relevant to a special application stored therein, the supplement memory means being provided with a protected storage space and the additional processor being adapted to monitor the storing of information in said protected storage space as well as to detect alteration of information stored in the protected storage space.

Preferred embodiments of the invention are set forth in the dependent claims.

It should be noted that in this application the term "protection" of information is used in reference to denying unauthorized recording and alteration of the information. Here, protection does not refer just to the blocking of copying or reading, although the unauthorized reading of protected information may also be denied.

A few preferred embodiments of the invention will now be described in more detail with reference to the accompanying figures, in which
fig. 1 shows one embodiment according to a method of the invention in a flow chart and
fig. 2 shows in a block diagram one inventive arrangement for protecting information in reference to a special application.

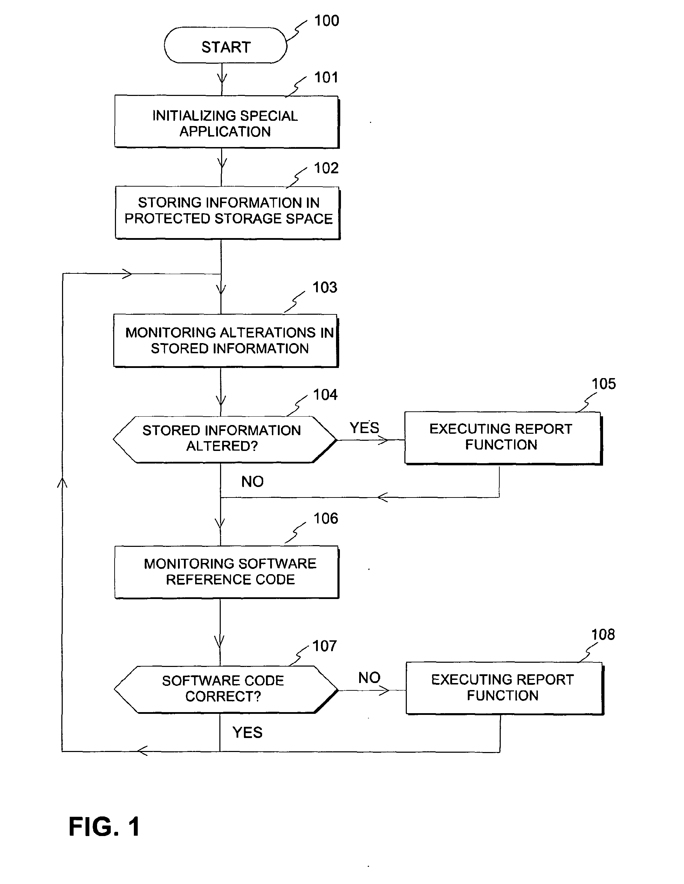

Fig. 1 illustrates a flow chart for one embodiment of the inventive method. First, at stage 101, it comprises executing initialization procedures for a special application. In a scales application, for example, this refers to the calibration of sensors, determination of tuning parameters and installation of special application software. At stage 102, the information of a special application to be protected is stored in the protected storage space of supplement memory means. Along with parameter data and the like used in the application, the protected storage space is preferably stored with specifying details regarding an apparatus, a user, etc. It is particularly preferred that a check code or proof total relating to the special application software be stored in the protected storage space.

At stage 103, after completing the initialization of a special application, the possible alterations of information stored in the protected storage space are being monitored by means of an additional processor. Monitoring can be effected by using e.g. proof totals or checksums or the like calculated from stored information, which change as any of the stored pieces of information changes. Such a proof total or checksum is preferably stored in the protected storage space for a comparison performed under supervision. If the additional processor detects an alteration in the stored information, 104, a report function will be activated by said additional processor, 105. The report can be e.g. one of the following functions:
- showing an authorization number,
- presenting a comment on the display of an apparatus,
- outputting the comment on a receipt,
- transmitting a report by data transfer out of the system,
- recording information in a memory or
- denying use of a special application.

In addition to alterations in information stored in the protected storage space, the control is used to monitor that the software is original and unaltered. This is executed by having a code included in the special application program, a proof total calculated from the program, or the like, compared with a check code stored in the protected storage space. If the codes do not match, a report function 108, which can be similar to that of stage 105, will be executed. The additional processor continues the monitoring process by returning to stage 103.

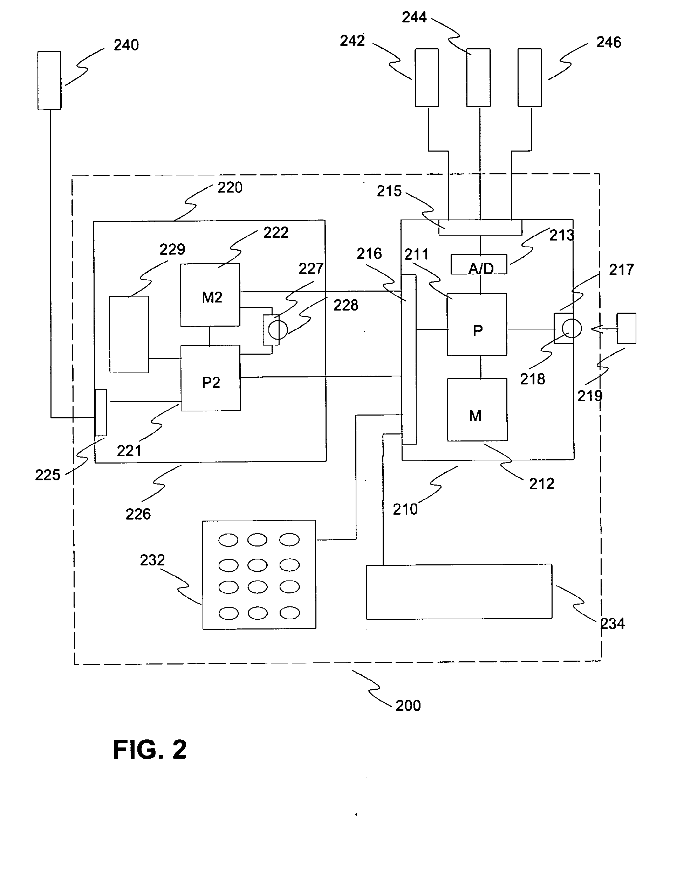

Fig. 2 shows one data processing system 200 of the invention in a block diagram. The data processing system comprises a data processing unit 210 and an accessory unit 220 along with its peripherals. The data processing unit 210 includes a processor unit 211 with associated memory means 212. Regarding its basic elements, the data processing unit complies most preferably with the structure of a personal computer, such as a Microsoft PC. The memory means 212 have an operating system stored therein, which is preferably a common operating system intended for personal computers, such as Microsoft Windows 95, 98, 2000, ME, XP, CE or more recent versions thereof or Linux and/or Sybase or the like.

The accessory unit 220 comprises an additional processor 221 with associated supplement memory means 222. In accordance with the invention, the supplement memory means include one or several protected storage spaces. The data processing system preferably also includes user interface means, which in the system shown in fig. 2 are the keypad 232 and the display 234. The user interface means attach to the data processing unit 210 and through an interface 216 further to the accessory unit. It is also possible to attach the user interface means to the accessory unit and through the accessory unit further to the data processing unit. This is an advantageous solution if the parameters/codes relating to the function of the display or keypad are stored in the memory means of the accessory unit, or if the user interface means are used to control the accessory unit.

The accessory unit can also comprise other elements, such as a wireless data transfer module 229. Peripherals 240, such as sensors, relating to a special application, can also be attached to the accessory unit by way of an interface 225. However, the peripherals relating to a special application can also be preferably attached to the data processing unit. Fig. 2 shows sensors 242, 244 and 246 connected by way of an interface 215 to the data processing unit. If the signal received from the sensors is analog, the data processing unit will be preferably provided with one or more A/D converters for converting the signals to digital ones for signal processing. The A/D conversion can also be performed outside the data processing unit. It is also possible that the signal is in digital form to begin with, e.g. distance measurement from a pulse product, whereby an A/D conversion is not needed. In addition to analog and binary sensors, the data processing system can also be provided with various buses by means of access units. Such buses may include e.g. RS 232C, RS 485, CAN, Profibus, etc. The inventive protection solution is naturally feasible for these, as well.

Special application software can be in storage in the memory of a data processing unit or in the memory of an accessory unit. When located outside the data processing unit, the digitalization unit may contain also special application software partially or entirely, whereby some of the information can be copied or transferred into a protected storage space of the accessory unit to provide thereby a protected overall function.

Parameters, proof totals or codes, relating to a special application, have preferably been stored in a protected storage space of the supplement memory means 222. Likewise, the additional processor's 221 program has preferably been stored in the supplement memory means, most preferably in the protected storage space. According to the invention, the additional processor's program drives the additional processor to monitor alterations of information stored in the protected storage space and to report eventual alterations. The report can be for example one of the following functions:
- showing an authorization number,
- presenting a comment on the display of an apparatus,
- outputting the comment on a receipt,
- transmitting a report by data transfer out of the system,
- recording information in a memory or
- denying use of a special application.

Transmission of a report by means of data transfer can be effected e.g. by means of a wireless data transfer module 229, whereby the data transfer link may preferably be a UMTS-, GSM-, GPRS-, EDGE-, G3-, Bluetooth-, WLAN-, CDMA-, WCDMA-, NMT-, Iridium-, Inmarsat-, TelDesic- or4G-communication link. The communication link can be established for transmitting a report e.g. to a party monitoring the operation of an automated special application.

The protected storage space is stored with information, which relates to a special application and the protection of which is desired. Such information may include e.g. the following data:
- an identification code or its derivative authorizing use of a special application,
- an identification code or its derivative required for reading from the protected storage space,
- an identification code or its derivative required for storing information or altering information stored in the protected storage space, and
- user information,
- a check code for special application software.

Depending on a special application, however, the protected storage space can be stored with quite diversified information. In the case of e.g. a weighing application, the protected storage space can be stored preferably with information as follows:
- tuning data for a weighing appliance,
- weighing data,
- time information for transactions,
- time information for tuning,
- proof total information,
- other log information,
- a code and/or version of weighing software,
- qualification time information for a weighing appliance,
- a qualification number or code for a weighing appliance,
- price information,
- customer records, and
- output data.

In particular, the protected storage space is preferably stored with parameters, which are used in a special application and which are essential for a correct operation of the special application. Especially parameters involved in running a special application to execute a technical function, such as weighing, are such that the storage thereof in the protected storage space is particularly preferred. A notable example comprises calibration parameters for the sensors of a measuring appliance.

Storage/alteration of information in a protected storage space can be effected e.g. by means of a user interface 232, 234 under control of the data processing unit 210 by way of an interface 216 or under control of the additional processor 221. The storage of information of alteration of stored information in a protected storage space is most preferably effected by means of some authorization procedure. Regarding certain information, reading of the information may also be subject to an authorization procedure.

Fig. 2 shows an activable switch 227 fitted in a closed space, e.g. in a box. The storage/alteration of information in a given protected storage space cannot be done until after activating the switch. To enable activation of the switch, the closed space must be opened and the opening leaves a detectable mark. The closed box is preferably provided with a seal 228, the box being openable by cracking the seal. Thus, the alteration of stored information can always be detected.

Another possibility of providing authorization is a programmatic authorization, whereby the alteration of information requires entering an identification code, said identification code being compared with a code preferably stored in a protected storage space. Optionally, it is possible to use any user identifier, a card, a smart card, a fingerprint, the data processing system including an identifier reader.

Fig. 2 shows further an authorization solution, wherein the alteration of information requires attaching a memory module 219 or the like to a port 218 of the data processing unit. The port is provided with a seal 217, whereby the attachment of a memory module to the port, and thus the alteration of information stored in the protected storage space, requires cracking of the seal.

The supplement memory means may also include two or more protected storage spaces, involving authorizations which are different from one another. It is conceivable, for example, that the storage of information in one protected space is possible from a data processing unit by having the data processing unit programmatically secured and the storage of information in the other protected storage space is only possible from an accessory unit, e.g. by opening a seal.

The invention can also be used for verifying the authenticity and originality of special application software. In this case, a protected storage space is stored with some piece of information relevant to the software. This piece of information can be e.g. a sum or total calculated from a program code, or it can be a specific code included in the program. The discussed code can be read/calculated by an additional processor from the currently used program and compared with a code stored in the protected storage. If the codes do not match, the program is not original and the additional processor can report it the same way as if the information stored in the protected storage space had been altered.

In fig. 2, in some preferred embodiments, the data processing system 200 can be for example an on-board computer for a motor vehicle. Thus, in a weighing application, the weighing sensors 240-246 can be weighing means not in contact with the vehicle or, for example, weighing means included in a loader of the vehicle.

In some inventive embodiments relating to vehicular application, the present data processing system, by virtue of its versatility, lends itself to other purposes in a vehicle, such as tracking engine, controlling gearshift, controlling lights, various alarms, displaying dashboard information, serving as a set of instruments, as an anti-start feature, burglar alarm, as a radio/TV, as a telephone and/or a terminal for the GPS system (Global Positioning System). Hence, the data processing unit 210 is preferably capable of tracking also several appliances and weighing means, even when weighing is not performed. In one preferred embodiment, the user's PIN code (Personal Identification Number), a password and/or some other user identification, stored in a protected storage space, is connected with an anti-start feature. This enables monitoring operators regarding the use of an on-board computer for setting useful operating restrictions both for the on-board computer and for the vehicle.

The accessory unit may feature several special functions relevant to the control and supervision of a vehicle: it may be responsible for cold starts, GPS- or web-based positioning, e.g. when the data processing unit is not operational, burglar alarm functions, in terms of which the accessory unit may operate independently, automatic brightness control for a display, e.g. according to ambient conditions, and the accessory unit may also comprise a special keypad. In handling, loading, shipping equipment, the data processing unit can be used e.g. for making sure that the program of a fuel control pump in the engine has not been replaced or that it has happened and left a mark. Accordingly, the machine manufacturer is able to ascertain that alterations are performed by skilled and authorized maintenance.

The invention has been described above with reference to the enclosed exemplary embodiments. Although reference is made above to a weighing application and a vehicular control as a special application, it is obvious that the invention is applicable to numerous special applications, in which the protection/authorization of information is required. Notable applications like this include e.g. taximeters, energy consumption meters, water meters, service hour counters for appliances, i.e. all devices desirably protected by means of physical or programmatic sealing and/or used for determining a payable charge on the basis of measuring results, etc.

The inventive data processing system is further applicable in taxicabs, public transportation vehicles, such as buses, airplanes or ships, emergency vehicles, in public places for having the protected space stored with photographs taken by an appliance-linked camera and for preserving the same. This maintains privacy and the pictures can be removed for viewing if this is called for by some incident.

It is also obvious that each special application can be used in numerous services. For example, the weighing application can be used e.g. in scales appliances for automobiles, trains, bridges, processes, laboratories, wheel loaders, forklifts, pallet trucks, cranes, excavators, reach trucks, garbage trucks, timber cranes, vehicular, truck cranes and other convenient scales and weighing systems.

The above description has presented several important industrial and commercial benefits gained by the inventive method. The present inventive method and arrangement makes it possible not to acquire expensive and impractical separate instruments for various special applications. Still, the invention enables the achievement of adequate operational safety and reliability for a special application. In addition, the invention enables the achievement of excellent interaction between a special application and other systems and applications because the special application can be used in the data processing unit of a common operating system, with data transfer equipment and data processing applications readily available therefor.

The invention has been described above with reference to the enclosed embodiments. It is obvious, however, that the invention is not limited to those exclusively, but encompasses all embodiments within the scope of the inventive idea and appended claims.

## Claims

1. A method for protecting information in a data processing system, wherein an operating system is stored in memory means of a data processing unit of the data processing system, and special application software used in the data processing system is stored in the data processing system, **characterized in that** information relevant to a special application is stored in a protected storage space present in the supplement memory means of an accessory unit, the storing of information in the protected storage space and/or the alteration of stored information being monitored by an additional processor and alterations in information stored in the protected storage space being detected by means of the additional processor.

2. A method as set forth in claim 1, **characterized in that** said detection of alteration in information stored in the protected storage space comprises at least one of the following functions:
- showing an authorization number,
- presenting a comment on the display of an apparatus,
- outputting the comment on a receipt,
- recording information in a memory,
- transmitting a report by data transfer out of the system, and
- denying use of a special application.

3. A method as set forth in claim 1, **characterized in that** said protected storage space is stored with at least one of the following pieces of information:
- an identification code or its derivative authorizing use of a special application,
- an identification code or its derivative required for reading from the protected storage space,
- an identification code or its derivative required for storing information or altering information stored in the protected storage space,
- a check code specified on the basis of information stored in the protected storage space, and
- user information.

4. A method as set forth in claim 1, **characterized in that** said special application is a weighing function.

5. A method as set forth in claim 4, **characterized in that** said protected storage space is stored with at least one of the following pieces of information:
- tuning data for a weighing appliance,
- weighing data,
- time information for transactions,
- time information for tuning,
- proof total information,
- other log information,
- a code and/or version of weighing software,
- qualification time information for a weighing appliance,
- a qualification number or code for a weighing appliance,
- price information,
- customer records, and
- output data.

6. A method as set forth in claim 1, **characterized in that** said information to be stored in the protected storage space comprises parameters for use in a special application, which are essential for a technically correct operation of the special application.

7. A method as set forth in claim 1, **characterized in that** the storage of information and/or the alteration of information stored in the protected storage space requires activation of an activating means linked with second memory means.

8. A method as set forth in claim 7, **characterized in that** the activating means is disposed in a closed space, whereby activation of the activating means requires a detectable intrusion into the closed space, e.g. by cracking a seal.

9. A method as set forth in claim 1, **characterized in that** the storage of information and/or the alteration of information stored in the protected storage space is conducted by means of an attached unit without using the data processing unit.

10. A method as set forth in claim 1, **characterized in that** the supplement memory means have defined therein a first protected storage space and a second protected storage space, the data processing unit having access to store information in the second protected storage space and the data processing unit having no access to store information in the first protected storage space.

11. A method as set forth in claim 1, **characterized in that** the storage of information and/or the alteration of information stored in the protected storage space is executed on the basis of an access control.

12. A method as set forth in claim 11, **characterized in that** the access control comprises at least one of the following functions:
- entering and checking an identification code,
- entering a smart card and reading and checking its particulars,
- checking information stored in a memory unit attached to the port of a data processing unit.

13. A method as set forth in claim 12, **characterized in that** said checking comprises a comparison with reference information stored in the protected storage space.

14. A method as set forth in claim 1, **characterized in that** the additional processor's program is stored in the protected storage space.

15. A method as set forth in claim 1, **characterized in that** the special application software measures a signal received from a peripheral device, such as a weighing sensor.

16. A method as set forth in claim 1, **characterized in that** the information stored in the protected storage is used as a basis for working out and storing a check code, whereby, in order to monitor alteration of information stored in the protected storage, the information stored in the protected storage space is used for working out a reference code matching the check code and comparing the same with said check code.

17. A method as set forth in claim 1, **characterized in that** the protected storage space is stored with a check code relevant to special application software and the data processing system's special application software is used for specifying a reference code matching the check code, which is compared with the stored check code for certifying the authenticity and/or originality of the special application software.

18. A method as set forth in claim 1, **characterized in that** the special application comprises determining a charge to be paid on the basis of a measured quantity.

19. A method as set forth in claim 1, **characterized in that** the storage of information or the alteration of information stored in the protected storage space requires the cracking of a physical or programmatic seal, the transaction of altering information leaving a detectable mark.

20. A method as set forth in claim 19, **characterized in that** the storage of information or the alteration of information stored in the protected storage space requires cracking a seal present in the port of a data processing unit and attaching a memory module or the like to said port.

21. An arrangement for protecting information in a data processing system, the data processing system comprising a data processing unit which includes a processor unit, first memory means with an operating system stored therein, and the data processing system comprising an accessory unit and means for storing and operating a special application program, **characterized in that** the accessory unit comprises an additional processor, as well as supplement memory means connected to the additional processor and having information relevant to a special application stored therein, the supplement memory means being provided with a protected storage space and the additional processor being adapted to monitor the storing of information in said protected storage space as well as to detect alteration of information stored in the protected storage space.

22. An arrangement as set forth in claim 21, **characterized in that** said detection of alteration in information stored in the protected storage space comprises at least one of the following functions:
- showing an authorization number,
- presenting a comment on the display of an apparatus,
- outputting the comment on a receipt,
- recording information in a memory,
- transmitting a report by data transfer out of the system, and
- denying use of a special application.

23. An arrangement as set forth in claim 21, **characterized in that** said protected storage space is adapted to be stored with at least one of the following pieces of information:
- an identification code or its derivative authorizing use of a special application,
- an identification code or its derivative required for reading from the protected storage space,
- an identification code or its derivative required for storing information or altering information stored in the protected storage space,
- a check code specified on the basis of information stored in the protected storage space, and
- user information.

24. An arrangement as set forth in claim 21, **characterized in that** said special application is a weighing function.

25. An arrangement as set forth in claim 24, **characterized in that** said protected storage space is adapted to be stored with at least one of the following pieces of information:
- tuning data for a weighing appliance,
- weighing data,
- time information for transactions,
- time information for tuning,
- proof total information,
- other log information,
- a code and/or version of weighing software,
- qualification time information for a weighing appliance,
- a qualification number or code for a weighing appliance,
- price information,
- customer records, and
- output data.

26. An arrangement as set forth in claim 21, **characterized in that** said information to be stored in the protected storage space comprises parameters for use in a special application, which are essential for a technically correct operation of the special application.

27. An arrangement as set forth in claim 21, **characterized in that** it comprises an activating means linked with second memory means, the storage of information and/or the alteration of information stored in the protected storage space being adapted to require activation of the activating means.

28. An arrangement as set forth in claim 27, **characterized in that** said activating means comprises a mechanical switch.

29. An arrangement as set forth in claim 27, **characterized in that** the activating means is disposed in a closed space, whereby activation of the activating means requires a detectable intrusion into the closed space, e.g. by cracking a seal.

30. An arrangement as set forth in claim 21, **characterized in that** the accessory unit comprises means for storing information and/or for altering information stored in the protected storage space without using the data processing unit.

31. An arrangement as set forth in claim 30, **characterized in that** said means for storing information in the protected storage space comprise a keypad, an identification card reader and/or a biometric reader.

32. An arrangement as set forth in claim 21, **characterized in that** the supplement memory means comprise a first protected storage space and a second protected storage space, the data processing unit being adapted to have access to store information in the second protected storage space and the data processing unit having no access to store information in the first protected storage space.

33. An arrangement as set forth in claim 21, **characterized in that** the storage of information and/or the alteration of information stored in the protected storage space is executed on the basis of an access control.

34. An arrangement as set forth in claim 33, **characterized in that** the access control comprises at least one of the following functions:
- entering and checking an identification code,
- entering a smart card and reading and checking its particulars,
- checking information stored in a memory unit attached to the port of a data processing unit.

35. An arrangement as set forth in claim 33, **characterized in that** said checking comprises a comparison with reference information stored in the protected storage space.

36. An arrangement as set forth in claim 21, **characterized in that** said second memory means are included in the additional processor.

37. An arrangement as set forth in claim 21, **characterized in that** said second memory means constitute a component detached from the additional processor.

38. An arrangement as set forth in claim 21, **characterized in that** the additional processor has its program stored in the protected storage space.

39. An arrangement as set forth in claim 21, **characterized in that** the accessory unit or data processing unit comprises an access to at least one peripheral device for use in a special application.

40. An arrangement as set forth in claim 21, **characterized in that** the peripheral device is a weighing sensor, the accessory unit or data processing unit comprising an A/D converter for converting an analog signal to a digital one.

41. An arrangement as set forth in claim 21, **characterized in that** the accessory unit comprises elements for establishing a wireless communication link and elements for transmitting said report in the form of a message by way of the wireless communication link.

42. An arrangement as set forth in claim 21, **characterized in that** a check code worked out on the basis of information stored in the protected storage space is adapted to be stored in the protected storage space, whereby, in order to monitor alteration of information stored in the protected storage, the additional processor is adapted to use information stored in the protected storage space for working out a reference code and to compare the same with said check code.

43. An arrangement as set forth in claim 21, **characterized in that** it comprises means for storing a check code relevant to special application software in the protected storage space, elements for using the special application software in order to specify a reference code matching the check code, and elements for comparing the reference code with the stored check code for certifying the authenticity and/or originality of the special application software.

44. An arrangement as set forth in claim 21, **characterized in that** the storage of information or the alteration of information stored in the protected storage space requires the cracking of a physical or programmatic seal, the transaction of information leaving a detectable mark.

45. An arrangement as set forth in claim 44, **characterized in that** the data processing unit has its port provided with a seal, whereby the storage of information or the alteration of information stored in the protected storage space requires cracking the seal and attaching a memory module or the like to said port.

46. An arrangement as set forth in claim 21, **characterized in that** the special application comprises determining a charge to be paid on the basis of a measured quantity.

47. An arrangement as set forth in claim 21, **characterized in that** the data processing unit is a PC, a mobile communicator and/or a combination including a mobile communicator and a PC and/or an Apple MacIntosh computer, and/or any combination of a Microsoft Windows computer, and/or any one of Microsoft Windows 95, 98, 2000, ME, XP, CE or more recent versions thereof or any computer solution based on Linux and/or Sybase or the like operating system.
